# EUROPÄISCHE PATENTSCHRIFT

(11) **EP 0 370 246 B1**
(45) Veröffentlichungstag und Bekanntmachung des Hinweises auf die Patenterteilung: **29.12.1993**
(21) Anmeldenummer: 89119687.5
(22) Anmeldetag: 24.10.1989
(51) Int. Cl.: F24F 13/04, F24F 13/12, B60H 1/00

(54) **Vorrichtung zur Steuerung von Mischkammern für Luftbehandlungsgeräte**
Device for controlling the mixing chambers of air treatment units
Dispositif de régulation des chambres de mélange pour installations de traitement d'air

(30) Priorität: 21.11.1988 DE 3839270
(43) Veröffentlichungstag der Anmeldung: 30.05.1990
(73) Patentinhaber: HAGENUK GMBH, D-24118 Kiel (DE)
(72) Erfinder: Gaik, Gerd, D-2301 Kronshagen (DE)
(74) Vertreter: Drömer, Hans-Carsten, Dr.

(56) Entgegenhaltungen:
- FR-A- 1 437 605
- FR-A- 2 175 394
- GB-A- 999 329
- US-A- 3 669 349

## Beschreibung

Die Erfindung bezieht sich auf eine Vorrichtung zur Steuerung von Mischkammern für Luftbehandlungsgeräte mit getrennt zugeführten Kalt- und Warmluftströmen, nach dem Oberbegriff vom Anspruch 1.

Bei derartigen Ausbildungen besteht das Problem, zugeführte Ströme mit großen Temperaturdifferenzen individuell zu vermischen und dabei eine einfache Steuerung der Zuführungen zu ermöglichen, um eine gute Einstellung der Abstromtemperatur mit einer praktikablen Ansteuerung zu gewährleisten.

Eine gattungsgemäße Anordnung ist nach der GB-A-999 329 bekannt geworden. Hierbei sind jeweils gegenüberliegende Seitenwandungen einer Mischkammer jeweils als Öffnung ausgebildet und durch eine Vielzahl von einzelnen verschwenkbaren und zusammenwirkenden Klappelementen verschließbar. Hierbei sind aufwendige Lagerungen für die einzelnen Klappelemente erforderlich und auch die Kopplung zur Verstellung der Klappelemente miteinander und von einer Seite zur anderen ist mit relativ großem Gestängeaufwand und vielen Drehpunkten druchführbar. Diese Gestänge und Drehpunkte sind für Klimaanlagen störanfällig und wegen der Wartung, insbesondere beim Einbau in Fahrzeugen, nachteilig.

Ferner ist es nach der FR-A-1 437 605 bekannt, eine Steuerung von Mischkammern für Luftbehandlungsgeräte mit getrennt zugeführten Kalt- und Warmluftströmen durchzuführen, wobei die Mischkammer ein Schieberelement aufweist.

Aus der US-A-3 669 349 ist eine Vorrichtung zur Steuerung von Mischkammern für Luftbehandlungsgeräte mit getrennt zugeführten Kalt- und Warmluftströmen zu entnehmen, wobei die Mischkammer in einer Seitenwandung eine Öffnung für den Kaltluftstrom und an einer anliegenden Seitenwandung eine Öffnung für den Warmluftstrom aufweist und den Öffnungen Elemente zur Freigabe und zum Verschließen zugeordnet sind. Hierbei sind die Elemente an den sich anliegenden Seiten über Stellelemente miteinander verbunden sind und in der einen Endlage die Öffnung verschließen und die Öffnung der anderen Seite öffnen und in der anderen Endlage umgekehrt wirken, wobei jede Seitenwandung nebeneinander angeordnete Zuführöffnungen aufweist und an jeder Seite ein Schieberelement parallel zur Seitenwandung für eine Freigabe und ein Verschließen zugeordnet ist. Der Abstand zwischen den Öffnungen ist etwa entsprechend ihrer Öffnungsbreite ausgebildet und jedes Schieberelement einen der Öffnungen zugeordneten etwa mittigen Durchtritt mit beiderseitigen Verschlußzungen entsprechend der Öffnungsbreite zur Abdeckung aufweist.

Die Aufgabe der Erfindung ist es, eine gattungsgemäße Vorrichtung zu schaffen, die mit einem einfachen mechanischen Aufbau und unter Berücksichtigung des Einsatzes in Fahrzeugen eine gute Steuerung, auch bei Luftströmungen mit sehr großen Temperaturdifferenzen, unter Verwendung einfacher Stellglieder gewährleistet.

Die Lösung dieser Aufgabe erfolgt erfindungsgemäß dadurch, daß die Seitenwandungen mit Öffnungen für den Kaltluftstrom und den Warmluftstrom an gegenüberliegenden Seiten angeordnet sind und jedes Schieberelement an der Außenseite der Mischkammer mit einem derartigen Spiel angeordnet ist, daß die Verschlußzungen an der Wandung durch den ausbildenden Unterdruck in der Mischkammer abdichtend anlegbar sind.

Hierdurch ist eine Einstellung des Mischungsverhältnisses von Kalt- und Warmluftstrom durch die Verschiebung eines Stellelementes auf einfache Weise möglich.

Weiterhin wird vorgeschlagen, daß die Öffnungen der Mischkammer jeweils kreisförmig und die zugeordneten Durchtritte im Schieberelement viereckig ausgebildet sind.

In der Zeichnung ist ein Ausführungsbeispiel einer Vorrichtung schematisch dargestellt. Es zeigen:

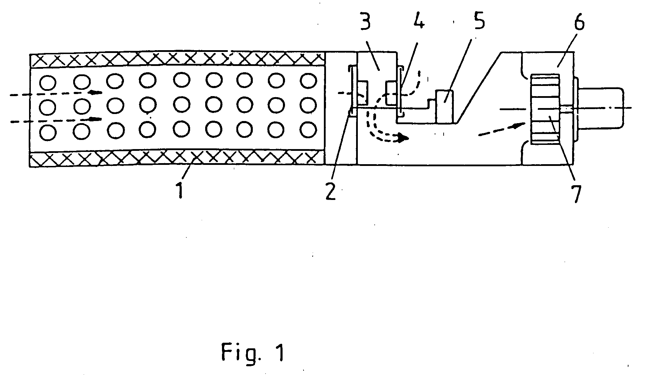

- Fig. 1: eine Prinzipanordnung eines Luftbehandlungsgerätes,

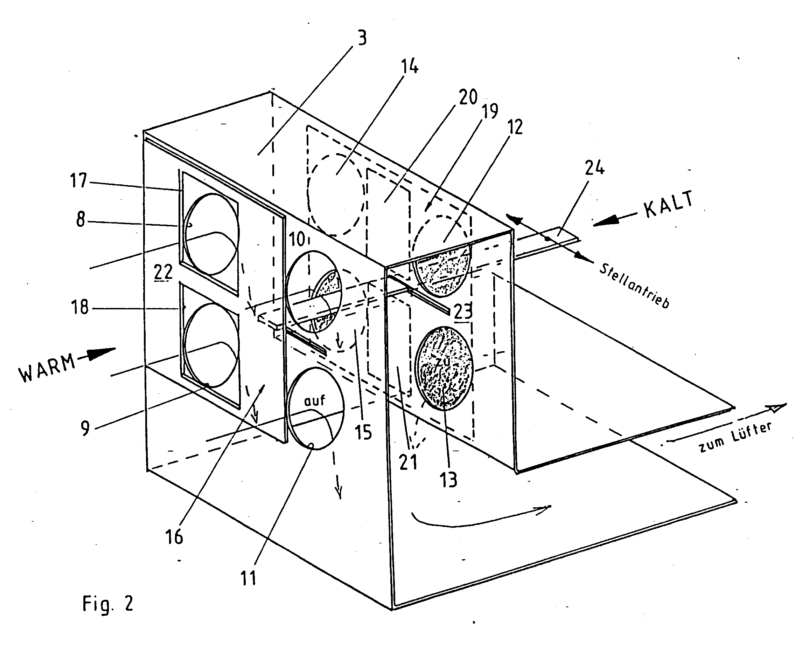

- Fig. 2: eine Mischkammer in schaubildlicher Darstellung,

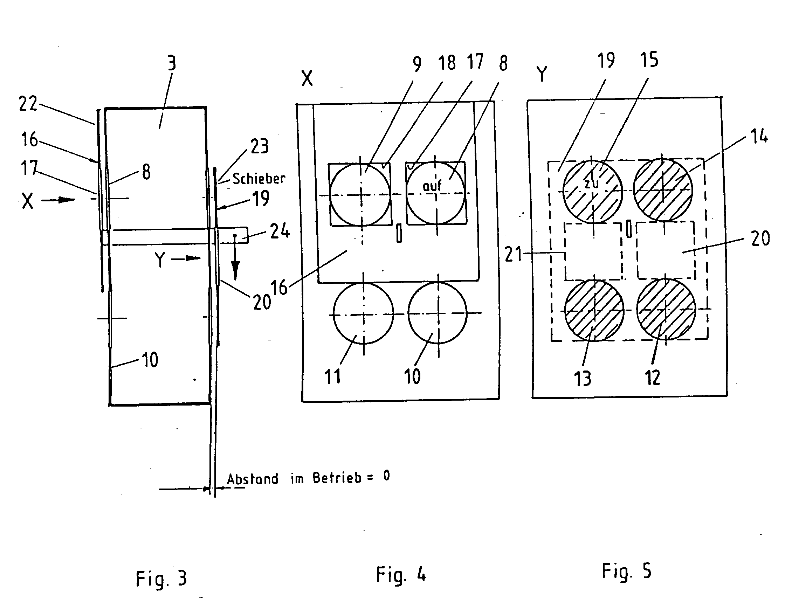

- Fig. 3: ein Schnitt durch eine Mischkammer,
- Fig. 4: eine Seitenansicht auf eine Mischkammerseite mit Schieber in Endstellung in geöffneter Stellung,
- Fig. 5: eine Seitenansicht gemäß Fig. 3 in Pfeilrichtung X mit geschlossenen Zuführungen.

Bei dem dargestellten Luftbehandlungsgerät ist ein durchflutbarer Wärmespeicher 1 mit elektrischen Heizstäben zur Erzeugung eines Warmluftstromes dargestellt, der über eine Zuführöffnung mit einem Schieberelement 2 einer Mischkammer 3 zuführbar ist. An der gegenüberliegenden Seite wird über eine Zuführöffnung mit einen Schieberelement 4 ein äußerer Kaltluftstrom zugeführt. Die Schieberelemente 2,4 werden dabei über einen Stellmotor 5 gesteuert. Die Mischkammer 3 besitzt einen Austritt 6 zu einem beheizbaren Fahrgastraum, der über ein angetriebenes Lüfterrad geführt ist.

Die Mischkammer 3 besitzt in dieser Ausbildung jeweils zwei untereinander und im Parallelabstand des Öffnungsdurchmessers angeordnete Öffnungen 8, 9 und 10, 11 an der Zuführseite für den Warmluftstrom und Öffnungen 12, 13 und 14, 15 an der Zuführseite für den Kaltluftstrom. Den Öffnungen 8, 9 und 10, 11 ist ein Schieberelement 16 mit entsprechenden Öffnung 17, 18 zugeordnet, während den Öffnungen 12, 13 und 14, 15 eine Schieberelement 19 mit Öffnungen 20, 21 zugeordnet ist.

Die Schieberelemente 16 bzw. 19 besitzen beiderseits von mittig angeordneten Durchtritten 17, 18 bzw. 20, 21 Verschlußzungen 22 bzw. 23 entsprechend der Öffnungsbreite auf. Hierdurch ist es möglich, in der einen Endlage der Schieberelemente 16 bzw. 19 die Öffnungen 8, 9 bzw. über die Durchtritte 17, 18 freizugeben und auch die Öffnungen 10, 11 durch die Verschlußzungen 22 bzw. 23 nicht abzudekken. In der anderen Endlage wird gleichzeitig ermöglicht, daß die Öffnungen 8 bis 11 durch die Verschlußzungen 22 bzw. 23 des Schiebers abgedeckt und die Öffnungen 12 bis 15 entsprechend freigegeben werden.

Die Schieberelemente 16 und 19 an den sich gegenüberliegenden Seiten der Mischkammer 3 sind dabei über eine Steuerstange 24 als Stellmittel derart versetzt miteinander verbunden, daß bei Freigabe des Durchtrittes mit den Öffnungen 8 bis 11 einer Seite die andere Seite mit den Öffnungen 12 bis 15 völlig verschlossen ist oder eine umgekehrte Anordnung ermöglicht wird. Somit ist es möglich, durch eine einfache Betätigung der Steuerstange 24 über den Stellmotor 5 alle Zwischenstellungen zu erzielen, um eine individuelle Zuführung von Warm- und Kaltluftstrom einzustellen und entsprechend den vorliegenden Verhältnissen abzustimmen.

Selbstverständlich ist es auch möglich, entsprechend andere Querschnittsformen auszubilden.

Durch eine außenliegenden Anordnung der Schieberelemente 16, 19 an den Wandungen der Mischkammer 3 ist auch eine freie Verformung durch entsprechende Temperatureinflüsse gewährleistet, so daß auch große Temperaturdifferenzen gut handhabbar sind. Die Führung der Schieberelemente 16, 19 und die Verbindung mit der Steuerstange 24 ist dabei derart bemessen, daß sich die Schieberelemente 16, 19 abdichtend durch den sich einstellenden Unterdruck in der Mischkammer 3 anlegen und damit eine gute Dichtwirkung erzielbar ist.

## Patentansprüche

1. Vorrichtung zur Steuerung von Mischkammern für Luftbehandlungsgeräte mit getrennt zugeführten Kalt- und Warmluftströmen, insbesondere für Fahrgasträume von Fahrzeugen, bei der die Mischkammer (3) in einer Seitenwandung eine Öffnung (8 bis 11) für den Kaltluftstrom und in einer weiteren Seitenwandung eine Öffnung (12 bis 15) für den Warmluftstrom aufweist und den Öffnungen (8 bis 15) Schieberelemente (16, 19) zur Freigabe und zum Verschließen zugeordnet sind, wobei die Schieberelemente (16, 19) an den sich gegenüber liegenden Seiten über Stellelemente (24) miteinander verbunden sind und in der einen Endlage die Öffnungen (8 bis 11) verschlossen sind und die Öffnungen (12 bis 15) der anderen Seite geöffnet sind, sowie in der anderen Endlage der Öffnungen (8 bis 11) verschlossen und die Öffnungen (12 bis 15) der anderen Seite geöffnet sind und die Schieberelemente (16, 19) parallel zur Seitenwandung geführt sind sowie der Abstand zwischen den Öffnungen (8, 9 und 10, 11 bzw. 12, 13 und 14, 15) etwa entsprechend ihrer Öffnungsbreite ausgebildet ist und jedes Schieberelement (16, 19) einen der Öffnungen (8, 9; 14, 15) zugeordneten etwa mittigen Durchtritt (17, 18; 20, 21) mit beiderseitigen Verschlußzungen (22 bzw. 23) entsprechend der Öffnungsbreite zur Abdeckung aufweist, dadurch gekennzeichnet, daß die Seitenwandungen mit Öffnungen (8 bis 11 und 12 bis 15) für den Kaltluftstrom und den Warmluftstrom an gegenüberliegenden Seiten angeordnet sind und jedes Schieberelement (16, 19) an der Außenseite der Mischkammer (3) mit einem derartigen Spiel angeordnet ist, daß die Verschlußzungen (22, 23) an der Wandung durch den ausbildenden Unterdruck in der Mischkammer (3) abdichtend anlegbar sind.

2. Vorrichtung nach Anspruch 1, dadurch gekennzeichnet, daß die Öffnungen (8 bis 14) der Mischkammer (3) jeweils kreisförmig und die zugeordneten Durchtritte (19, 18, 20, 21) im Schieberelement (16 bzw 19) viereckig ausgebildet sind.

## Claims

1. Device for controlling mixing chambers for air conditioning units with separately supplied cold and hot air flows, particularly for the passenger compartments of vehicles, in which the mixing chamber (3) has, in a side wall, an opening (8 to 11) for the cold air flow and, in a further side wall, an opening (12 to 15) for the hot air flow, and sliding elements (16, 19) for opening and closing are assigned to the openings (8 to 15), the sliding elements (16, 19) being connected to one another at the opposite sides via actuating elements (24) and, in the one end position, the openings (8 to 11) being closed and the openings (12 to 15) on the other side being open, and, in the other end position, the openings (8 to 11) being closed and the openings (12 to 15) being open, and the sliding elements (16, 19) being guided parallel to the side wall and the distance between the openings (8, 9 and 10, 11 or 12, 13 and 14, 15) being designed to substantially correspond to their opening width and each sliding element (16, 19) having a substantially central passage (17, 18; 20, 21) assigned to one of the openings (8, 9; 14, 15) and with blanking tongues (22 and 23) for covering on either side, corresponding to the opening width, characterised in that the side walls with openings (8 to 11 and 12 to 15) for the cold air flow and the hot air flow are arranged on opposite sides and each sliding element (16, 19) is arranged on the outside of the mixing chamber (3) with such a clearance that the blanking tongues (22, 23) are positionable, sealing, against the wall by the developing partial vacuum in the mixing chamber (3).

2. Device according to claim 1, characterised in that each of the openings (8 to 14) of the mixing chamber (3) is circular and the assigned passages (19, 18, 20, 21) in the sliding element (16 or 19) are quadrilateral.

## Revendications

1. Dispositif de régulation des chambres de mélange pour installations de traitement de l'air avec courant d'air froid et courant d'air chaud amenés séparément, en particulier pour espaces réservés aux voyageurs dans des véhicules, dans le cas duquel la chambre de mélange (3) présente, dans une paroi latérale, une ouverture (12 à 15) pour le courant d'air froid et, dans une autre paroi latérale, une ouverture (8 à 11) pour le courant d'air chaud et dans le cas duquel il est adjoint aux ouvertures (8 à 15) des éléments coulissants (16, 19) pour l'ouverture et pour la fermeture, les éléments coulissants (16, 19) pour l'ouverture et pour la fermeture qui se trouvent aux côtés opposés l'un à l'autre, étant reliés l'un à l'autre par des éléments de réglage (24) et, pour l'une des positions extrêmes, les ouvertures (8 à 11) étant fermées et les ouvertures (12 à 15) de l'autre côté étant ouvertes, de même que pour l'autre position extrême, les ouvertures (12 à 15) étant fermées et les ouvertures (8 à 11) de l'autre côté étant ouvertes, et les éléments coulissants (16, 19) étant guidés parallèlement à la paroi latérale, la distance comprise entre les ouvertures (8, 9 et 10, 11 ainsi que 12, 13 et 14, 15, respectivement) étant prévue de façon à correspondre à leur largeur d'ouverture, et chaque élément coulissant (16, 19) présentant un passage médian (17, 18; 20, 21) correspondant aux ouvertures (8, 9; 14, 15), passage aux deux côtés duquel il est prévu des bandes de fermeture (22 et 23, respectivement) correspondant à la largeur d'ouverture, bandes destinées à couvrir les ouvertures, le dispositif étant caractérisé en ce que les parois latérales présentant les ouvertures (12 à 15 et 8 à 11) pour le courant d'air froid et pour le courant d'air chaud sont prévues à des côtés opposés et en ce que chaque élément coulissant (16, 19) se trouve au côté externe de la chambre de mélange (3) à un tel espace de jeu que les bandes de fermeture (22, 23) puissent s'appliquer à la paroi de façon étanche sous l'effet de la dépression se présentant dans la chambre de mélange (3).

2. Dispositif suivant la revendication 1, caractérisé en ce que les ouvertures (8 à 15) de la chambre de mélange (3) ont été prévues de forme circulaire et en ce que les passages correspondants (17, 18 ,20, 21) formés dans l'élément coulissant (16 ou 19) ont été prévus de forme carrée.
